Europäisches Patentamt

European Patent Office

Office européen des brevets

(11) Veröffentlichungsnummer: **0 618 438 A1**

## (12) EUROPÄISCHE PATENTANMELDUNG

(21) Anmeldenummer: **94104106.3**

(22) Anmeldetag: **16.03.94**

(51) Int. Cl.5: **G01N 21/27, G01N 21/35**

(30) Priorität: **29.03.93 DE 4310204**

(43) Veröffentlichungstag der Anmeldung:
**05.10.94 Patentblatt  94/40**

(84) Benannte Vertragsstaaten:
**AT BE CH DE ES FR GB IT LI**

(71) Anmelder: **SIEMENS AKTIENGESELLSCHAFT**
**Wittelsbacherplatz 2**
**D-80333 München (DE)**

(72) Erfinder: **Kimmig, Ludwig**
**Schumacherstrasse 17**
**D-76275 Ettlingen (DE)**
Erfinder: **Krause, Peter**
**Binger Strasse 11**
**D-76185 Karlsruhe (DE)**

(54) **Verfahren zum Justieren eines Messgerätes, insbesondere eines IR-Absorptions-Photometers.**

㊐ Es ist bekannt, die Kennlinie von Absorptions-Photometern mittels einer Funktion höherer Ordnung zu linearisieren. Gemäß der vorliegenden Erfindung werden die beiden sich gegenseitig beeinflussenden gerätespezifischen Parameter, Verstärkungs- und Durchhangsfaktor der Funktion höherer Ordnung dadurch gewonnen, daß mit zwei Prüfgasen zwei Prüfsignale aufgenommen werden. Aus den bekannten Konzentrationen der zu messenden Komponenten der Prüfgase werden Sollwerte gebildet. Mit einem iterativen Verfahren wird der Verstärkungsfaktor aufgrund der Differenz zwischen errechnetem Ausgangssignal und Sollwert angenähert und der zugehörige Durchhangfaktor ermittelt.

Die Erfindung wird hauptsächlich bei Einstrahl-IR-Absorptions-Photometern angewandt.

EP 0 618 438 A1

Die Erfindung betrifft ein Verfahren zum Justieren eines Meßgerätes, insbesondere eines Absorptions-Photometers gemäß dem Oberbegriff des Anspruchs 1.

Mit dem Justieren von Meßgeräten soll erreicht werden, daß das Ausgangssignal im gesamten Meßbereich der physikalischen Meßgröße entspricht. Ferner soll häufig eine gewünschte Kennlinie eingestellt werden. Setzt z. B. der physikalische Teil des Meßgerätes die Meßgröße nichtlinear in ein elektrisches Meßsignal um und soll die Kennlinie linear sein, so kann man den gewünschten linearen Zusammenhang zwischen Meßgröße und Ausgangssignal dadurch erreichen, daß das Meßsignal mit einer nichtlinearen Gleichung, gegebenenfalls höherer Ordnung, in das Ausgangssignal umgesetzt wird. Entsprechend wird verfahren, wenn bei einem ursprünglich linearen Zusammenhang eine Kennlinie bestimmter Nichtlinearität, z. B. eine logarithmische Kennlinie, oder allgemein aus einer beliebigen Kennlinie eine andere Kennlinie erzeugt werden soll. Im allgemeinen wird so vorgegangen, daß an einer bestimmten Anzahl von Prüfpunkten, die über den Meßbereich verteilt sind, die physikalische Größe auf bekannte Werte eingestellt wird und mit den dabei erhaltenen Signalen Parameter der nichtlinearen Funktion so bestimmt werden, daß die gewünschte Kennlinie erhalten wird. Häufig ist dies nicht einfach möglich, wenn, wie z. B. bei IR-Absorptions-Photometern, die Parameter der nichtlinearen Funktion voneinander abhängig sind. Für die Linearisierung von Photometern der genannten Art wird zur Linearisierung der Kennlinie eine Funktion verwendet, die eine Gleichung fünfter Ordnung sowie einen Verstärkungs- und einen Durchhangfaktor enthält. Die beiden Faktoren, die gerätespezifisch sind, werden dadurch bestimmt, daß abwechselnd an zwei verschiedenen Prüfgasen bekannter Zusammensetzung gemessen und die Anzeige auf die Konzentration der zu messenden Gaskomponente des jeweils gemessenen Prüfgases eingestellt wird, bis die gewünschte Kennlinie erreicht ist. Das eine Prüfgas enthält die zu messende Komponente in einer im oberen Teil des Meßbereichs liegenden Konzentration, das andere Prüfgas in einer mittleren Konzentration. Dieses Verfahren hat den Nachteil, daß es viel Zeit in Anspruch nimmt, da zwischen den Meßvorgängen die Meßzelle des Gerätes ausreichend gespült werden muß und daß während des langen Justiervorganges viel Prüfgas verbraucht wird. Auch bei anderen Meßgeräten, die in entsprechender Weise justiert werden, ist die Justage zeitraubend.

Der vorliegenden Erfindung liegt die Aufgabe zugrunde, ein Verfahren zu schaffen, mit dem die Justage von Meßgeräten der oben beschriebenen Art vereinfacht ist.

Erfindungsgemäß wird diese Aufgabe mit den im Anspruch 1 angegebenen Maßnahmen gelöst.

Besonders vorteilhaft kann die Erfindung zur Justage von Absorptions-Photometern eingesetzt werden. Ein hierzu geeignetes Verfahren ist im Anspruch 2 angegeben.

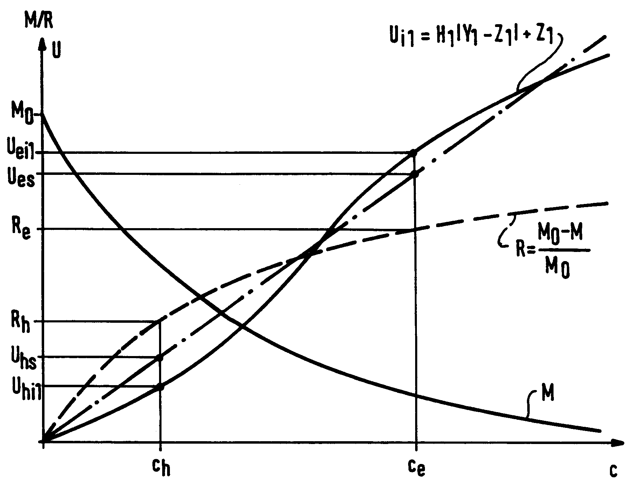

Anhand der Figur werden ein Ausführungsbeispiel des neuen Verfahrens sowie Weiterbildungen und Ergänzungen näher beschrieben und erläutert.

Als Beispiel wird die Justage eines Einstrahl-IR-Absorptions-Photometers beschrieben. Im Diagramm der Figur ist mit M der Verlauf des Ausgangssignals des physikalischen Teils eines solchen Photometers in Abhängigkeit von der Konzentration c des zu messenden Gases dargestellt. Das Signal $M_0$ ist bei der Konzentration 0 am größten und nimmt mit zunehmender Konzentration stetig nichtlinear ab. Um ein Signal zu erzeugen, das mit der Konzentration zunimmt, wird das Signal M in ein Signal R nach der Gleichung $R = (M_0 - M) / M_0$ umgewandelt. Der Verlauf des Signals R ist in der Figur als gestrichelte Kurve eingezeichnet.

Es gibt eine Reihe von Meßgeräten, z. B. Zweistrahl-Absorptions-Photometer, bei denen ein solche Umrechnung nicht erforderlich ist, da sie unmittelbar ein Signal liefern, dessen Verlauf wie das Signal R stetig ansteigend ist. Zu Beginn der Justage werden nacheinander zwei Prüfgase in die Meßzelle des Photometers geleitet. Das eine enthält die zu messende Komponente in einer bezüglich des Meßbereichs mittleren Konzentration $c_h$, die andere in einer im oberen Bereich des Meßbereichs liegenden Konzentration $c_e$. Die dabei gewonnenen Meßsignale bzw. die abgeleiteten Meßsignale $R_h$ und $R_e$ werden gespeichert. Ferner werden die tatsächlichen Konzentrationen, die bei den Prüfgasen bekannt sind, als Sollwerte $U_{hs}$, $U_{es}$ eingegeben, wobei die üblichen Korrekturen von Luft und Temperatur vorgenommen werden können. Die durch die Punkte $U_{hs}$, $c_h$ und $U_{es}$, $c_e$ führende Gerade s ist die gewünschte lineare Kennlinie.

Die Signale R werden mit folgenden Gleichungen in Ausgangssignale $U_i$ umgesetzt:

$$U_i = H \, | \, y - z \, | \, + z$$
$$y = R \cdot E$$
$$z = f(y),$$

wobei H ein Durchhangfaktor, E ein Empfindlichkeitsfaktor und f(y) eine Funktion höherer Ordnung ist.

Die Faktoren H und E, die voneinander abhängig sind, sollen bestimmt werden. Zunächst werden sie, etwas willkürlich, auf bestimmte Werte, z. B. $H_0 = 0$ und $E_0 = 1$ festgesetzt.

In einem ersten Schritt eines iterativen Verfahrens wird der Empfindlichkeitsfaktor E zunächst näherungsweise bestimmt. Mit Gleichung (1) wird

das Ausgangssignal $U_{ei}$ mit dem gemessenen Eingangssignal $R_e$ und den angenommenen Faktoren $H_1$, $E_{11}$ berechnet:

$$U_{ei1} = H_1 \mid y_{e1} - z_{e1} \mid + Z_{e1} = Z_{e1},$$

mit

$$y_{e1} = R_e \cdot I \text{ und } z_{e1} = f(y_1).$$

Dieses Ausgangssignal wird mit dem Sollwert $U_{es}$ verglichen. Ist die Differenz größer als ein vorgegebener Betrag, wird der Empfindlichkeitsfaktor korrigiert mit der Formel:

$$E_{21} = E_{11} (I + (U_{es} - U_{ei1}) \cdot k).$$

k ist ein konstanter Faktor für den gilt: $0 < k < 1$. Zweckmäßig ist er kleiner als 0,3. In einem praktischen Beispiel betrug er 0,1. Mit dem so korrigierten Empfindlichkeitsfaktor $E_2$ wird das Ausgangssignal $U_{ei}$ abermals berechnet, diesmal aber mit $y_{e2} = R_e \cdot E_2$. Das Signal $U_{ei2}$ wird wieder mit dem Sollwert $U_{es}$ verglichen. Solange die Differenz größer als der vorgegebene Betrag ist, wird der Zyklus wiederholt mit den Korrekturgleichungen

$$E_{Ij} = E_{1(j-I)} (I + (U_{es} - U_{ei(j-I)} \cdot k))$$

Ist nach n Zyklen die Differenz kleiner als der vorgegebene Betrag, wird der Durchhangfaktor $H_1$ mit der Gleichung

$$U_{hs} = H_1 \mid y_{hl} - z_{hl} \mid + z_h$$

berechnet, mit $y_{hl} = R_h \cdot E_1$, ($E_e = E_{In}$ ist der zuvor ermittelte Empfindlichkeitsfaktor) und $z_{hl} = f(y_{hl})$. Mit diesem neuen Wert $H_1$ des Durchhangfaktors wird mit dem oben beschriebenen iterativen Verfahren ein neuer Wert $E_2$ des Empfindlichkeitsfaktors ermittelt und anschließend der zugehörige Durchhangfaktor $H_2$ angeordnet, und zwar so lange, bis für ein Paar von Empfindlichkeits- und Durchhangfaktor der berechnete Wert $U_{ei}$ um weniger als den vorgegebenen Betrag vom Sollwert $U_{es}$ abweicht. Der Justiervorgang kann damit beendet werden. Es ist aber auch möglich, gegebenenfalls zusätzlich, die Differenz des berechneten Ausgangssignals $U_{hi}$ bei der Konzentration $c_h$ mit dem Durchhang-Sollwert $U_{hs}$ darauf zu überprüfen, ob sie kleiner als ein vorgegebener Betrag ist.

Bei den nachfolgenden Messungen werden die Meßsignale in die Gleichungen (1), (2), (3) eingegeben, so daß ein linearer Zusammenhang zwischen der Konzentration und den Ausgangssignalen besteht. Sollen mehrere Gaskomponenten gemessen werden, dann muß das Gerät für jede Komponente in der beschriebenen Weise justiert werden. Es wird also für jede Komponente ein Empfindlichkeits- und ein Durchhangfaktor ermittelt, wozu ein Prüfgas mit einem Gemisch der zu messenden Komponente verwendet werden kann.

**Patentansprüche**

1. Verfahren zum Justieren eines Meßgerätes, insbesondere eines IR-Absorptions-Photometers, bei dem zur Linearisierung der Kennlinie die Meßsignale in eine einen Durchhangfaktor und einen Empfindlichkeitsfaktor enthaltende Gleichung höherer Ordnung eingegeben und daraus der Empfindlichkeitsfaktor und der Durchhangfaktor bestimmt werden, wobei der Empfindlichkeitsfaktor und der Durchhangfaktor voneinander abhängig sind, **gekennzeichnet durch**

a) es werden zwei unterschiedliche Prüfsignale aufgenommen;

b) unter Zugrundelegung eines ersten Durchhangfaktors $H_1$ und eines ersten Empfindlichkeitsfaktors $E_1$ wird mit dem ersten Prüfsignal ein erstes Ausgangssignal $U_{lei}$ errechnet und dieses mit einem dem ersten Prüfsignal zugeordneten Sollwert $U_{es}$ verglichen;

c) es wird ein zweiter Verstärkungsfaktor $E_2$ bestimmt, indem die Differenz zwischen dem errechneten Ausgangssignal $U_{lei}$ und dem Sollwert $U_{es}$ mit einem konstanten Faktor (k), der zwischen 0 und 1 liegt, multipliziert, zu dem so gebildeten Produkt Eins addiert und die Summe mit dem ersten Verstärkungsfaktor $E_1$ multipliziert wird;

d) ist die Differenz zwischen dem errechneten Ausgangssignal $U_{lei}$ und dem Sollwert $U_{es}$ größer als ein vorgegebener Betrag, werden die Schritte b) und c) wiederholt, wobei jeweils ein neuer Empfindlichkeitsfaktor gebildet wird;

e) ist die Differenz zwischen dem errechneten Ausgangssignal $U_{nei}$ und dem zugehörigen Sollwert $U_{es}$ kleiner als der vorgegebene Wert, wird unter Zugrundelegung des ermittelten Empfindlichkeitsfaktors $E_{In}$ des zweiten Prüfsignals und des diesem zugeordneten Sollwertes ein Durchhangfaktor $H_1$ errechnet;

f) die Schritte b), c) und d) werden wiederholt, bis für ein Paar von Empfindlichkeits- und Durchhangfaktoren die Differenz zwischen dem errechneten Ausgangssignal $U_{nei}$ und dem Sollwert $U_{es}$ kleiner als der vorgegebene Wert ist;

g) die Justierung wird abgeschlossen, das Meßgerät zum Messen freigegeben und die Meßsignale mit der Funktion höherer Ordnung mit den ermittelten Verstärkungs- und Durchhangfaktoren $E_n$, $H_n$ in Ausgangssignale umgesetzt.

2. Verfahren nach Anspruch 1 zum Justieren eines IR-Absorptions-Photometers, mit den Merkmalen:

a) es wird die Konzentration der zu messenden Gaskomponente mit der Gleichung

$$U = H \mid y - z \mid + z$$

errechnet, worin
H der Durchhangfaktor,
$y = R \cdot E$ das Produkt aus dem Verstärkungsfaktor E und dem Meßsignal bzw. einem unmittelbar daraus abgeleiteten Signal R ist, das bei der Konzentration 0 den Wert Null und bei der oberen Meßbereichsgrenze den maximalen Wert hat,
$z = f(y)$ eine Linearisierungsfunktion höherer Ordnung ist,
b) das erste Prüfgas mit einer bekannten Konzentration $c_e$ der zu messenden Gaskomponente wird durch die Meßzelle des Photometers geleitet und ein erstes Meß-Istsignal $R_{ei}$ gebildet und gespeichert;
c) das zweite Prüfgas, das die zu messende Gaskomponente in geringerer bekannter Konzentration $c_h$ als das erste Prüfgas enthält, wird durch die Meßzelle geleitet und ein zweites Istsignal $R_{hi}$ gebildet und gespeichert;
d) mit einem ersten Empfindlichkeitsfaktor $E_1$, vorzugsweise Eins, und einem ersten Durchhangfaktor $H_1$, vorzugsweise Null, werden die Gleichungen gebildet und für die Konzentration $c_e$ des ersten Prüfgases der Istwert $U_{ei}$ der Konzentration $c_e$ berechnet

$$y_{le} = E_1 \cdot R_{ei}$$
$$z_{le} = f(y_{le})$$
$$U_{ei} = H_1 \mid y_{le} - z_{le} \mid + z_{le};$$

e) der Istwert $U_{lei}$ für die Konzentration $c_e$ wird mit dem Sollwert $U_{es}$ durch Differenzbildung $U_{es} - U_{lei}$ verglichen;
f) ist diese Differenz größer als ein vorgegebener Betrag, wird ein neuer Empfindlichkeitsfaktor mit der Gleichung

$$E_2 = E_1 (l + (U_{es} - U_{lei}) \cdot k)$$

gebildet, worin k ein Faktor kleiner l, vorzugsweise kleiner 0,3 ist;
g) die Schritte d) bis h) werden mit dem jeweils letzterrechneten Empfindlichkeitsfaktor wiederholt, bis der Betrag der Differenz $U_{es} - U_{nei}$ kleiner als der vorgegebene Betrag ist, wobei $U_{nei}$ der errechnete Istwert für die Konzentration $c_e$ nach n Zyklen ist;
h) mit dem ermittelten Empfindlichkeitsfaktor $E_n$ und der Gleichung $U_{hs} = H_1 \mid y_h - z_h \mid + z_h$ wird der Durchhangfaktor $H_1$ berechnet;
i) mit den neuesten Faktoren $H_1$, $E_{ln}$ wird der Istwert $U_{ei}$ der Konzentration $c_e$ berechnet und mit dem Sollwert $U_{es}$ verglichen;
j) ist der Betrag der Differenz zwischen Istwert $U_{ei}$ undSollwert $U_{es}$ größer als ein vorgegebener Wert, werden die Schritte e) bis i) wiederholt;
k) ist der Betrag der Differenz $U_{ei} - U_{es}$ kleiner als der vorgegebene Wert, sind der Empfindlichkeitsfaktor E und der Durchhangfaktor H bestimmt und die Justierung wird abgebrochen;
l) aus den Eingangssignalen werden die Konzentrationen nach den Gleichungen

$$U = H \mid y - z \mid + z; \quad y = E \cdot R; \quad z = f(y)$$

errechnet.

3. Verfahren nach Anspruch 2, **dadurch gekennzeichnet,** daß in jedem Zyklus die Differenz zwischen dem zweiten Meßsignal-Sollwert $U_{hs}$ und dem jeweiligen Istwert $U_{nhi}$ gebildet und die Justage beendet wird, wenn die Differenz kleiner als ein vorgegebener Wert ist.

$$U_{i1} = H_1 |Y_1 - Z_1| + Z_1$$

$$R = \frac{M_0 - M}{M_0}$$

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | EP-A-0 247 439 (BOEHRINGER MANNHEIM)<br>* Seite 8, Absatz 1 -Absatz 4 *<br>* Seite 9, Zeile 42 - Zeile 52 *<br>--- | 1-3 | G01N21/27<br>G01N21/35 |
| A | DE-A-32 47 807 (OLYMPUS OPTICAL)<br>* Seite 5, Absatz 2 - Seite 6, Zeile 1 *<br>* Seite 9, Zeile 14 - Zeile 29 *<br>* Seite 10, Zeile 5 - Zeile 29 *<br>* Seite 11, Zeile 30 - Zeile 32 *<br>* Seite 12, Zeile 6 - Zeile 11 *<br>* Abbildungen 2,4 *<br>--- | 1,2 | |
| A | EP-A-0 290 013 (FUJI PHOTO FILM)<br>* Seite 3, Zeile 4 - Zeile 12 *<br>* Seite 6, Zeile 32 - Seite 7, Zeile 10 *<br>* Abbildung 11 *<br>--- | 1,2 | |
| A | IBM TECHNICAL DISCLOSURE BULLETIN,<br>Bd.15, Nr.6, November 1972, NEW YORK US<br>Seiten 1920 - 1922<br>'Technique for multidimensional nonlinear curve fitting'<br>* Absatz 1 *<br>----- | 1 | |

| | | RECHERCHIERTE SACHGEBIETE (Int.Cl.5) |
|---|---|---|
| | | G01N |

Der vorliegende Recherchenbericht wurde für alle Patentansprüche erstellt

| Recherchenort | Abschlußdatum der Recherche | Prüfer |
|---|---|---|
| DEN HAAG | 11. Juli 1994 | Thomas, R.M. |